(19) **Europäisches Patentamt**

**European Patent Office**

**Office européen des brevets**

(11) **EP 1 352 206 B1**

(12) **EUROPEAN PATENT SPECIFICATION**

(45) Date of publication and mention
of the grant of the patent:
**09.02.2005 Bulletin 2005/06**

(21) Application number: **01270743.6**

(22) Date of filing: **11.12.2001**

(51) Int Cl.⁷: **F41G 9/00**

(86) International application number:
**PCT/SE2001/002733**

(87) International publication number:
**WO 2002/048636 (20.06.2002 Gazette 2002/25)**

(54) **METHOD FOR CONTROLLING A MISSILE**

VERFAHREN ZUR STEUERUNG EINES FLUGKÖRPERS

PROCEDE DE COMMANDE DE MISSILE

(84) Designated Contracting States:
**AT BE CH CY DE DK ES FI FR GB GR IE IT LI LU
MC NL PT SE TR**

(30) Priority: **13.12.2000 SE 0004596**

(43) Date of publication of application:
**15.10.2003 Bulletin 2003/42**

(73) Proprietor: **SAAB AB
581 88 Linköping (SE)**

(72) Inventors:
• **ANDERSSON, Magnus
S-585 90 LINKÖPING (SE)**
• **LJUNG, Stefan
S-184 31 Akersberga (SE)**
• **WALLBING, Joakim
S-691 41 Karlskoga (SE)**

(74) Representative: **Falk, Bengt
Saab Bofors Support AB,
Patents and Trademarks
691 80 Karlskoga (SE)**

(56) References cited:
**WO-A2-96/25641         GB-A- 2 134 632
GB-A- 2 177 213          US-A- 5 132 695**

**Description**

The present invention relates to a process for guiding a tactical missile towards a target, whereby the missile is guided until the final phase in accordance with some known principle for proportional navigation or other known guidance principle.

Systems for guiding tactical missiles in the final phase are usually based on traditional proportional navigation or modem guidance theory. Regarding known technology in this context, reference can be made, for example, to the article in IEEE TRANSACTIONS ON AEROSPACE AND ELECTRONIC SYSTEMS, Vol. 34, No. 1, January 1998, p. 277-288. This article describes a variant of the traditional proportional navigation guidance, PNG, that is designated "Biased PNG" or BPNG.

When designing terminally guided guidance systems for certain missiles such as those against fixed targets, besides a specification of miss distance it is necessary for the attitude angle of the missile at intercept to be within a limited permitted range. These guidance requirements cannot normally be met by a guidance system that was developed for flight trajectories without restrictions on the attitude angle.

Guidance of a missile in its final phase must embody both a high degree of accuracy as well as rapid reaction to guidance signals. The behavior of the missile during this phase constitutes a critical factor. The missile must be able to carry out the final maneuvers necessary for target acquisition during a constantly diminishing available time of flight. The maneuvering capability of the missile is dependent on both the velocity of the missile and the design of its fuselage. It is thus necessary that the process for guidance of the missile be made compatible with the performance capability of the missile.

The previously mentioned proportional navigation constitutes a well-known guidance rule, which operates well in many cases. Under certain simplified assumptions it can be shown that proportional navigation constitutes the optimal guidance rule. However, when the assumptions do not apply, proportional navigation is no longer optimal and its performance is degraded. The main purpose of the rule for proportional navigation guidance, and variants of it, is to generate a final miss distance that is zero. This does not guarantee, however, that the complete guidance objective is always met.

The purpose of the present invention is to achieve a process for guidance of a missile in its final phase in accordance with a suboptimal rule for terminal guidance, RPGN (Reference Proportional Navigation Guidance), for flight trajectories with requirements like those stated above. The process is based mainly on an extension of the previously known BPNG algorithm (Biased Proportional Navigation Guidance algorithm). The guidance rule of the BPNG algorithm is modified so that the missile, as claimed in the present invention process, is forced to follow a pre-determined smooth reference trajectory that is calculated in conjunction with the introduction of the final phase when the homing device of the missile locks onto the target, or the final phase criteria specified are met. The process is especially suitable for application against fixed targets.

The proposed process as claimed in the present invention embodies the following benefits:

1. The requirements for intercept conditions regarding velocity angle and body angles can be met.

2. The flight profile is determined explicitly. Among other things, the complete intercept characteristics can be determined and optimized in advance in the air. Furthermore, the logics can be tailored to meet the intercept requirements and boundary conditions, such as permitted maximum commanded acceleration. Contact with the target can be lost temporarily without having dramatic impact on performance, and without necessarily needing to use target-tracking algorithms.

3. Demands on the roll dynamics of the missile are moderate.

4. An arbitrary guidance rule can be applied to follow the flight trajectory. PNG and versions thereof can be used.

5. It is possible to compensate for the dynamics of the missile in advance.

6. The process is also applicable for tracking without a homing device when position finding is obtained from another sensor such as GPS etc.

Pursuant to a beneficial procedure the predetermined reference trajectory regarding the final phase is determined in such a way that the continuity of the trajectory and at least two derivatives are assured in the points where the final phase of the trajectory starts and ends, and at intermediate points where transitions between different sub-trajectories are effected. For example, the continuity of the trajectory is assured for two or three derivatives.

Pursuant to a further development of the beneficial process, the predetermined reference trajectory is designed to comprise a plurality of sub-trajectories. If the number of sub-trajectories is limited, the calculation operation becomes less complex than would otherwise be the case.

In a two-dimensional case the sub-trajectories are preferably shaped as segments of circles, ellipses and/or polynomial functions.

In a three-dimensional case the sub-trajectories can be shaped on the surface of curvilinear sections of objects such as spheres, cylinders, ellipsoids, torus, cones and/or paraboloids, etc.

Pursuant to another further development of the process as claimed in the present invention, in which the final phase is defined as the interval from when the homing device of the missile locks onto the target or when the final phase criteria are fulfilled until a concluding alignment phase, the predetermined reference trajectory is adapted at transitions to the final phase between sub-trajectories and/or to the alignment phase by polynomial smoothing to form a smooth trajectory with continuity in the trajectory and at least two derivatives. Transitions between sub-trajectories can, according to one process, be smoothed by means of a higher order polynomial such as a seventh order polynomial, while transitions to the final phase and/or the alignment phase can be similarly smoothed by a higher order polynomial such as a sixth order polynomial.

The present invention is described in more detail below with reference to appended drawings in which:

Figure 1 schematically illustrates the final phase and the alignment phase for a missile mission considered as a two-dimensional case.

Figure 2 schematically illustrates the final phase and the alignment phase for a missile mission considered as a three-dimensional case.

Figure 3 schematically denotes an example of how a reference trajectory can be formed by two circular segments.

Figure 4 schematically denotes the reference trajectory illustrated in Figure 3 in another coordinate system.

Figure 5 shows six examples of how a reference trajectory can be formed based on circular segments.

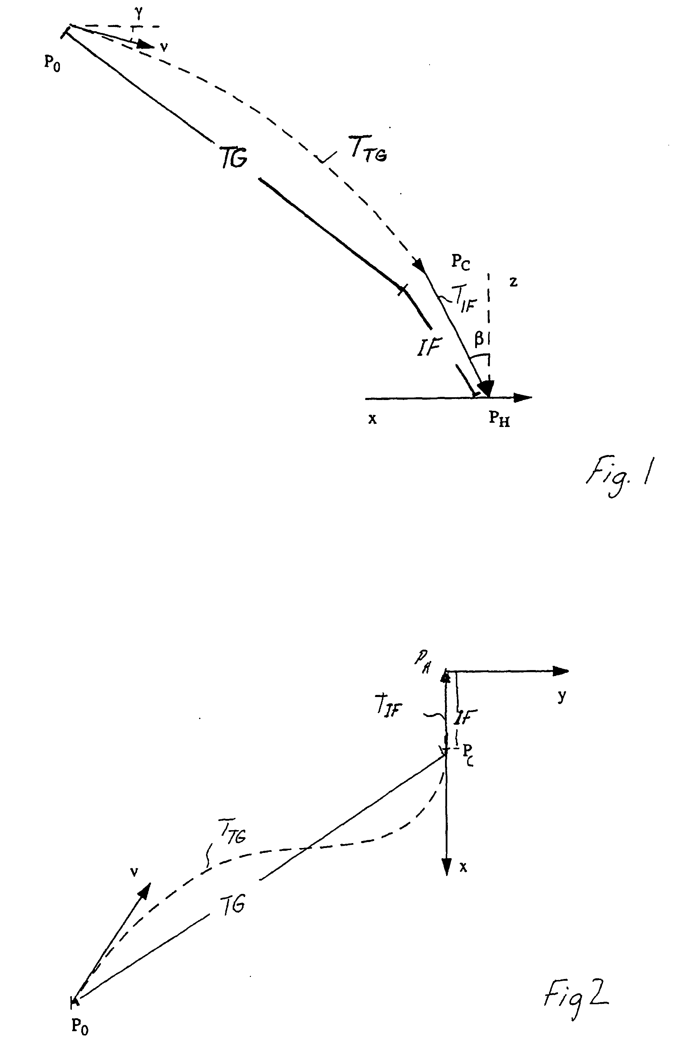

As shown in the two-dimensional case illustrated in Figure 1 the final stage of a missile's flight is subdivided into a final phase TG and a subsequent alignment phase IF. $P_0$ denotes the position of the missile at a sensor fix of the missile's position. $P_H$ denotes the intercept point in a target. $P_C$ denotes the transition between the final phase TG and the alignment phase IF. At position $P_0$ the homing device of the missile locks onto the target. After an appropriate flight between position $P_0$ and $P_C$ the missile shall follow a trajectory $T_{IF}$ between positions $P_C$ and $P_H$. The trajectory $T_{IF}$ consists of a straight line, and has a number of restrictions applied. Among other things, it is required that the surface of the target be intercepted at a certain angle. This requirement can, without losing much in accuracy, be interpreted as a corresponding angle relative to the earth's surface, the xy-plane of the target-fixed coordinate system, designated by $\beta$ in Figure 1. By virtue of the coordinate transformation angle $\beta$ is limited to the angle interval $[0, \pi/2]$. The maximum permitted lateral deviation at intercept can be expressed as a maximum rotation around the z-axis and can amount to a few degrees. Further, the velocity of the missile is designated by v, and its velocity relative to the x-axis by $\gamma$.

The process as claimed in the present invention is essentially based on guiding the missile between positions $P_0$ and $P_C$ in an appropriate trajectory by a means that is described in more detail below.

The final stage for the flight of a missile was mentioned earlier with reference to Figure 1 for the two-dimensional case, as this one is easiest to illustrate. The same requirements apply for the general three-dimensional case, even though some extra requirements must also be taken into consideration. Figure 2 illustrates the final phase and the alignment phase from above, i.e. along the positive z-axis, for a three-dimensional case. As far as possible the same designations are used as in Figure 1. For both Figures 1 and 2 the missile does not necessarily need to be pointing at the target at target lock-on.

As claimed herein the present invention assures a smooth trajectory during the entire final stage of the missile with smooth transitions in $P_0$ and $P_C$, and at any intermediate points where transitions occur between different sub-trajectories. $T_{TG}$ is a reference trajectory that the missile shall be guided to follow to reach the target when the terminal guidance phase starts. The reference trajectory is built up from one or more sub-trajectories, and preferably of one or two. Smooth transitions are arranged by ensuring that the trajectory and a selectable number of derivatives, for example two or three, have continuity in the transitions. To achieve the desired continuity in the transitions the trajectory is adapted in existing transitions by polynomial smoothing.

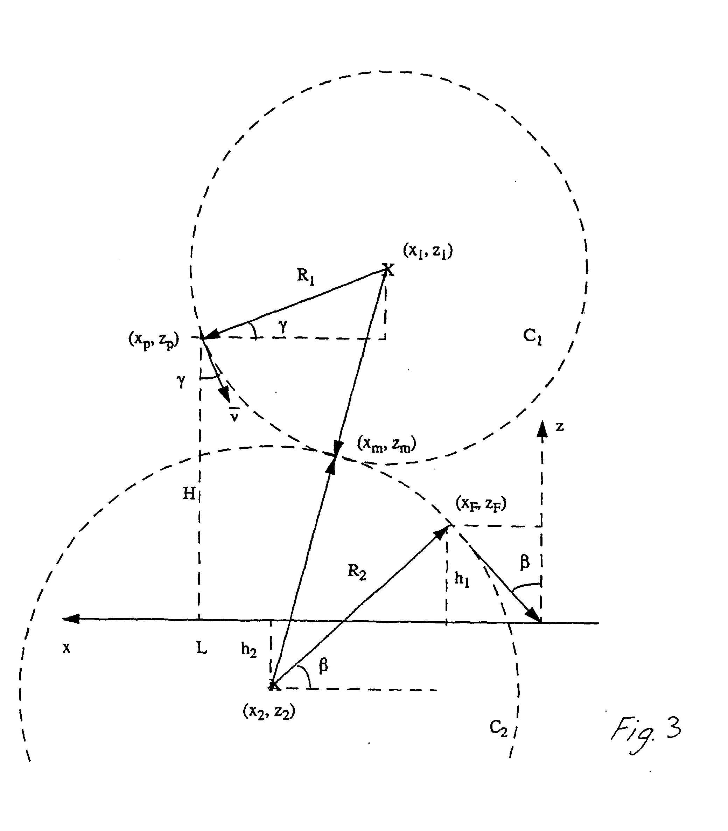

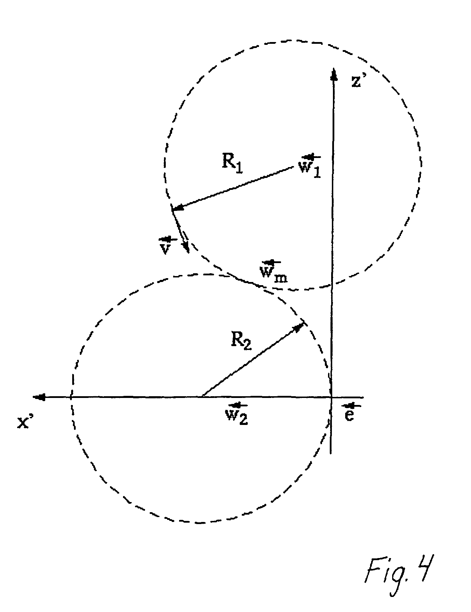

Consideration is given below to the problem of designing a reference trajectory $T_{TG}$ for terminal guidance of the missile from the point in time when the missile locks onto the target $P_0$, i.e. when the final phase starts, until the final phase TG passes into the alignment phase IF with reference to Figures 3 and 4. If the velocity vector of the missile and the linear trajectory during the alignment phase lie in the same two-dimensional plane the problem is purely two-dimensional, and there is a straightforward solution. An example is illustrated in Figure 3, and a special case is illustrated in Figure 4 where the center for one of the circles is located on the x-axis by the target-fixed coordinate system.

The two-dimensional trajectory is, in fact, a special case of the general three-dimensional case. Despite this fact the two-dimensional case is described separately as it is of central importance for the three-dimensional case, depending on which strategy is employed for the design of the flight path.

In the two-dimensional case the final phase trajectory or reference trajectory, TG, of the missile is completely restricted to one plane, which is parallel with one of the cardinal planes in the target-fixed coordinate system. The total trajectory can consist of sub-trajectories, which preferably consist of segments of circles, ellipses and/or polynomial functions, etc.

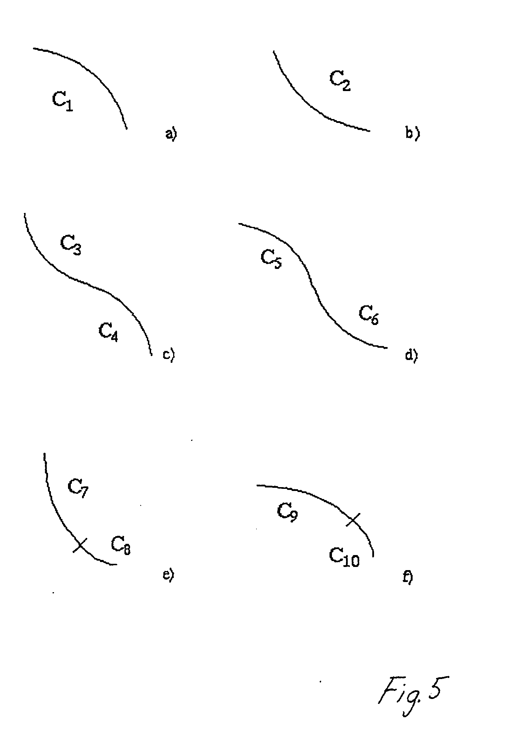

The reference trajectory can be designed with one or two sub-trajectories, and with the use of circular segments in accordance with the models illustrated in Figure 5. In the variants shown in Figures 5a and b it is a matter of adapting a circular segment $C_1$ or $C_2$, while the examples shown in Figures 5c-f illustrate trajectory formations comprised of two circular segments. The circular segments are here designated $C_3$-$C_{10}$ in the way shown in the Figures. As shown in the Figures the concave side of the circular segments can face upwards or downwards. In addition, both segments can face the same direction as shown in Figures 5e and f, or face opposite directions as shown in Figures 5c and d.

Segments of ellipses are preferably used in situations when the linear extension of the missile's velocity vector at lock-on points past the target. In such a case the reference trajectory can be based on a segment of an ellipse. In other cases it is proposed that one or two circular segments be allowed to form the trajectory.

Determination of radii and midpoints of circles with circular segments that shall be comprised in the reference trajectory are described in this section. With reference to Figures 3 and 4 the approach to the problem dealt with is to determine the characteristics of two circles $C_1$ and $C_2$, i.e. the coordinates for midpoints $(x_1,y_1)$ and $(x_2,y_2)$ and the radii $R_1$ and $R_2$. The velocity of the missile at $(x_p,y_p)$ and the position $(x_F,y_F)$, where the missile is predetermined to pass into the alignment phase, is expected to be known.

To enable the formulation of the necessary equations, the coordinates for the midpoints are expressed in terms of partially known information. The coordinates can thus be expressed as:

$$x_1 = x_p - R_1 \cdot \cos \gamma$$

$$z_1 = z_p + R_1 \cdot \sin \gamma$$

$$x_2 = x_F + R_2 \cdot \cos \beta$$

$$z_2 = z_F - R_2 \cdot \sin \beta$$

Moreover, continuity of the trajectory is assured by selecting the circles so that they touch each other $(x_m, y_m)$. This is achieved through:

$$(x_m - x_1)^2 + (z_m - z_1)^2 = R_1^2$$

$$(x_m - x_2)^2 + (z_m - z_2)^2 = R_2^2$$

This choice of circle parameters also assures the continuity of the first derivative of the trajectory, that is to say:

$$(z_m - z_1)/R_1 = \pm (z_m - z_2)/R_2$$

$$(x_m - x_1)/R_1 = \pm (x_m - x_2)/R_2$$

A total of six indeterminate parameters shall be determined from these equations. Furthermore, two unknown

auxiliary parameters $(x_m, y_m)$ have been introduced. This means that eight parameters must be determined from six equations, which shows that further information must be provided to obtain a unique solution. For purposes of calculation it seems appropriate to apply criteria to the relationship between the radii of the circles, for example $R_2 > 2 \cdot R_1$. By selecting the radii in this way the center points of the circles can be calculated in a straightforward manner.

The solution to the general problem in the previous section can be re-formulated as the solution to the coupled system of linear and non-linear equations.

$$(x_p - x_1)^2 + (z_p - z_1)^2 = R_1^2$$

$$(x_F - x_2)^2 + (z_F - z_2)^2 = R_2^2$$

$$(x_m - x_1)^2 + (z_m - z_1)^2 = R_1^2$$

$$(x_m - x_2)^2 + (z_m - z_2)^2 = R_2^2$$

$$(x_p - x_1)/(z_p - z_1) = \pm \, v_z/v_x$$

$$(x_F - x_2)/(z_F - z_2) = \pm \, e_z/e_x$$

$$(x_m - x_1)/(z_m - z_1) = \pm \, (x_m - x_2)/(z_m - z_2)$$

The system contains seven equations with eight unknowns, which means that the solution is to be found in a subspace to $R_8$. By specifying a relationship between the radii of the circles

$$R_2 = a \cdot R_1$$

for a known value of a, a unique solution is obtained.

There is, of course, an analytical solution to this system. However, it is shown to involve substantial expressions. A numerical solution is, naturally, possible, but despite this there is reason to consider simplifications before the equation system is resolved. This can be achieved by transforming the original problem to one that is more easily handled.

In the two-dimensional case when the velocity vector of the missile and the vector for the alignment phase lie in the same plane, the transformation is simplified to a rotation and a translation. It is assumed that the start point of the alignment phase is known and that the origin of coordinates in the coordinate system is located in the intercept point in the target. The purpose of the rotation is to make the vector for the alignment phase parallel with the z-axis. Thereafter the origin of coordinates is moved from the start point for the vector of the alignment phase to the intersection between the final phase, TG, and the alignment phase, IF. The transformation is called the Wallbing transformation, and the transformed quantities lie in the Wallbing space.

In the two-dimensional case it is particularly easy to visualize the construction of the missile's reference trajectory. Neither does the formulation of the mathematical base result in any troublesome obstacle. In contrast to this the three-dimensional situation involves an extra dimension, which in the general case significantly increases the complexity. However, all situations can be processed with the same simplicity as in the two-dimensional case by using the tools produced there.

During the alignment phase, IF, of the missile the trajectory is assumed to be polynomial-shaped and to proceed in one plane in the target-fixed coordinate system. Consequently, the three-dimensional problem can be interpreted as how to find the projection of the missile trajectory in this plane. The question is thus how the projection is charted through the actual guidance rules in three dimensions. Usually the true trajectory is selected to follow the surfaces of uncomplicated objects such as planes, cylinders, spheres, ellipsoids, or other surfaces that are easily described mathematically, or combinations of these, whereby the continuity requirement is taken into consideration at transitions between sub-trajectories. In this context an important question is to minimize the number of sub-trajectories, that is to say the number of transitions between objects that are required to establish the complete reference trajectory.

A number of approaches are possible for designing the reference trajectory of the missile. All methods, however, are based on the above-mentioned fundamental concept, and it is only the realization that differs.

Pursuant to a first proposal the trajectory is designed in such a way that it is limited to one or more surfaces of elementary objects such as spheres or cylinders. In most cases two sub-trajectories are sufficient to guide the missile from the lock-on position until intercept with the target. The shortest distance connecting two points on a flat surface is a straight line. The shortest distance connecting two points on a curved surface is a curvilinear trajectory, as it is impossible to locate a straight line on a random curved surface. For example, the shortest trajectory is given on a sphere of a segment of a circle, and can consequently be located in a plane that rotates in comparison with the target-fixed coordinate system. The center-point of the sphere is located in accordance with rules from the two-dimensional case.

Pursuant to a second proposal, which is a special case of the first proposal, the reference trajectory is limited to one plane which does not necessarily lie parallel with the xz- or yz-plane, but which can rotate around the z-axis in comparison with these planes. However, it is assumed that the perpendicular of the plane in question is orthogonal to the perpendicular (z-axis) of the xy-plane. The missile moves on circles in the rotated plane, which is equivalent to asserting that the missile moves on a sphere.

Transition to the final phase, transitions between sub-trajectories, and the transition to the alignment phase shall be shall be smooth in the process claimed in the present invention. The requirement thus placed on the reference trajectory in transition zones is that the function for the reference trajectory and an arbitrary number of derivatives shall be continuous. It is proposed that smoothing in the transition zones be achieved by polynomial smoothing. The following describes an example of polynomial approximation for a two-dimensional case where the sub-trajectories consist of circular segments.

The procedure for polynomial approximation between the circles is based on a degree of the leading term being selected so that the degree of freedom is sufficiently high to permit a unique determination of a polynomial that results in analytical continuity in the smoothing. The problem can generally be formulated as the determination of a polynomial in an interval $(x_s, x_r)$ such that the function $y(x)$ and its two first derivatives $y'(x)$ and $y''(x)$ is continuous in the interval. In addition, two internal points, $x_1$ and $x_2$, are selected in the interval to determine the second derivative and thus suppress severe fluctuations. This implies eight degrees of freedom, which is equivalent to a seventh order polynomial. The polynomial to be determined is:

$$y(x) = a \cdot (x - x_s)^7 + b \cdot (x - x_s)^6 + c \cdot (x - x_s)^5 + d \cdot (x - x_s)^4 + e \cdot (x - x_s)^3 +$$
$$+ f \cdot (x - x_s)^2 + g \cdot (x - x_s) + h$$

The first two derivatives of the polynomial are:

$$y'(x) = 7a \cdot (x - x_s)^6 + 6b \cdot (x - x_s)^5 + 5c \cdot (x - x_s)^4 + 4d \cdot (x - x_s)^3 +$$
$$+ 3e \cdot (x - x_s)^2 + 2f \cdot (x - x_s) + g$$

$$y''(x) = 42a \cdot (x - x_s)^5 + 30b (x - x_s)^4 + 20c \cdot (x - x_s)^3 +$$
$$+ 12d \cdot (x - x_s)^2 + 6e \cdot (x - x_s) + 2f$$

The coefficients of the polynomial are determined in such a way that the prescribed characteristics are achieved.

The following describes a second type of polynomial designed to link an elliptical or circular trajectory to the trajectory of the alignment phase, or to the trajectory of the missile at the lock-on point. In this case it is not necessary to consider an instantaneous change of, for example, the curvilinear velocity from a positive to a negative value in the definition interval. On the other hand, an internal nodal point is useful for controlling the behavior of the function defined by the polynomial. Other demands on the polynomial, i.e. the continuity of the functional value and the first derivatives, correspond with the previous situation. Thus 2n+3 degrees of freedom are required, which means a polynomial of the 2n+2 order. Using the same designations as previously, the polynomial to be determined for n=2 is:

$$y(x) = a \cdot (x - x_s)^6 + b \cdot (x - x_s)^5 + c \cdot (x - x_s)^4 + d \cdot (x - x_s)^3 + e \cdot (x - x_s)^2 +$$

$$+ f \cdot (x - x_s) + g$$

The first two derivatives of the polynomial can then be written:

$$y'(x) = 6a \cdot (x - x_s)^5 + 5b \cdot (x - x_s)^4 + 4c \cdot (x - x_s)^3 + 3d \cdot (x - x_s)^2 + 2e \cdot (x - x_s) + f$$

$$y''(x) = 30a \cdot (x - x_s)^4 + 20b \cdot (x - x_s)^3 + 12c \cdot (x - x_s)^2 + 6d \cdot (x - x_s) + 2e$$

The coefficients of the polynomial are determined such that the prescribed characteristics are achieved.

In the above, polynomial smoothing has primarily been described for a two-dimensional case. The three-dimensional case is divided into two two-dimensional cases. Thus polynomial smoothing can be performed in accordance with similar principles for the three-dimensional case, and is not described in any further detail herein.

The present invention is not limited to the exemplified description given above; instead, the framework of the invention as defined in the Patent Claims appended to this application can accommodate a number of variants in order to determine an adequate reference trajectory.

## Claims

1. A process for guidance of a missile towards a target whereby the missile is guided until a final phase in accordance with some known principle for proportional navigation or other known guidance principle, wherein during the said final phase the missile is guided to follow a smooth predetermined reference trajectory that may comprise a plurality of sub-trajectories, the reference trajectory being calculated in conjunction with the initiation of the said final phase to have continuity in the transition between the former guiding principle and the guiding principle during the final phase.

2. A process as claimed in Patent Claim 1, **wherein** the final phase is initiated when a homing device arranged in the missile locks onto the target.

3. A process as claimed in Patent Claim 1, **wherein** the final phase criteria for the status of the missile, such as position and velocity, is established and that the final phase is initiated when the established final phase criteria are met.

4. A process as claimed in Patent Claim 3, **wherein** the GPS system is employed for determining the status of the missile.

5. A process as claimed in any of the preceding Patent Claims 1-4, **wherein** the predetermined reference trajectory relating to the final phase is determined such that the trajectory and at least two derivatives have continuity in the points where the final phase of the trajectory starts and ends, and in intermediate points where transitions between different sub-trajectories are effected.

6. A process as claimed in Patent Claim 5, **wherein** the continuity of the trajectory is assured for two or three derivatives.

7. A process as claimed in any of the preceding Patent Claims 1-6, **wherein** in a two-dimensional case the sub-trajectories are shaped like segments of circles, ellipses and/or polynomial functions.

8. A process as claimed in any of the preceding Patent Claims 1-6, **wherein** in a three-dimensional case the sub-trajectories are shaped on the surface of curvilinear sections of objects such as spheres, cylinders, ellipsoids, torus, cones or paraboloids.

9. A process as claimed in any of the preceding Patent Claims 1-8 whereby the final phase is defined as the interval from when the homing device of the missile locks onto the target, or when the specified final phase criteria are met, until a concluding alignment phase, wherein the predetermined reference trajectory at transitions to the final phase, between sub-trajectories, and/or to the alignment phase are adapted by polynomial smoothing for the formation of a smooth trajectory with continuity in the said trajectory and at least two derivatives.

**10.** A process as claimed in Patent Claim 9, **wherein** the transitions between sub-trajectories are smoothed by means of a higher order polynomial such as a seventh order polynomial, for example.

**11.** A process as claimed in any of the Patent Claims 9-10, **wherein** transitions to the final phase and/or the alignment phase are smoothed by means of a higher order polynomial such as a sixth order polynomial, for example.

**12.** A process as claimed in any of the preceding Patent Claims, **wherein** compensation for missile dynamics is entered into the predetermined reference trajectory.

**Patentansprüche**

**1.** Verfahren zur Lenkung eines Flugkörpers auf ein Ziel, wobei der Flugkörper bis zu einer Endphase in Übereinstimmung mit einem bekannten Prinzip zur proportionalen Navigation oder einem anderen bekannten Lenkprinzip gelenkt wird, wobei während der Endphase der Flugkörper so gelenkt wird, dass er einer gleichmäßigen, vorbestimmten Referenzflugbahn folgt, die eine Anzahl von Unterflugbahnen aufweisen kann, wobei die Referenzflugbahn in Verbindung mit der Initiierung der Endphase berechnet wird, um in dem Übergang zwischen dem vorhergehenden Lenkprinzip und dem Lenkprinzip während der Endphase eine Kontinuität zu haben.

**2.** Verfahren nach Patentanspruch 1, wobei die Endphase initiiert wird, wenn die Zielansteuerungsvorrichtung, die in dem Zugkörper angeordnet ist, das Ziel erfaßt.

**3.** Verfahren nach Patentanspruch 1, wobei die Endphasenkriterien für den Status des Flugkörpers, wie beispielsweise Position und Geschwindigkeit, errichtet werden und die Endphase initiiert wird, wenn die errichteten Endphasenkriterien erfüllt sind.

**4.** Verfahren nach Patentanspruch 3, wobei zum Bestimmen des Status des Flugkörpers das GPS-System verwendet wird.

**5.** Verfahren nach einem der vorhergehenden Patentansprüche 1 bis 4, wobei die vorbestimmte Referenzflugbahn bezüglich der Endphase so bestimmt ist, dass die Flugbahn und wenigstens zwei Ableitungen in den Punkten wo die Endphase der Flugbahn beginnt und endet und an den dazwischenliegenden Punkten, wo die Übergänge zwischen unterschiedlichen Unterflugbahnen bewirkt werden, eine Kontinuität hat.

**6.** Verfahren nach Patentanspruch 5, wobei die Kontinuität der Flugbahn für zwei oder drei Ableitungen sichergestellt ist.

**7.** Verfahren nach einem der vorhergehenden Patentansprüche 1 bis 6, wobei in einem zweidimensionalen Fall die Unterflugbahnen die Segmente von Kreisen, Ellipsen und/oder Polynomen geformt sind.

**8.** Verfahren nach einem der vorhergehenden Patentansprüche 1 bis 6, wobei in einem dreidimensionalen Fall die Unterflugbahnen an der Oberfläche von gekrümmten Abschnitten von Objekten wie beispielsweise Kugeln, Zylindern, Ellipsoiden, Ringflächen, Kegeln oder Paraboloiden geformt sind.

**9.** Verfahren nach einem der vorhergehenden Patentansprüche 1 bis 8, wobei die Endphase als das Intervall definiert ist, von dem Zeitpunkt, zu welchem die Zielansteuerungsvorrichtung das Ziel erfaßt, oder zu welchem die spezifizierten Endphasenkriterien erfüllt sind, bis zu einer abschließenden Fluchtungsphase, wobei die vorbestimmte Referenzflugbahn an Übergängen zur Endphase zwischen Unterflugbahnen und/oder der Fluchtungsphase durch polynomes Glätten zur Ausbildung einer gleichmäßigen Flugbahn mit Kontinuität in der Flugbahn und bei wenigstens zwei Ableitungen, ausgebildet sind.

**10.** Verfahren nach Patentanspruch 9, wobei die Übergänge zwischen Unterflugbahnen mittels eines Polynoms höherer Ordnung, wie beispielsweise eines Polynoms siebter Ordnung geglättet sind.

**11.** Verfahren nach einem der Patentansprüche 9 bis 10, wobei die Übergänge in die Endphase und/oder die Fluchtungsphase mittels eines Polynoms höherer Ordnung, wie beispielsweise eines Polynoms der sechsten Ordnung geglättet sind.

**12.** Verfahren nach einem der vorhergehenden Patentansprüche, wobei die Kompensation für die Triebkraft des Flugkörpers in die vorbestimmte Referenzflugbahn eingegeben wird.


**Revendications**

**1.** Processus destiné au guidage d'un missile vers une cible, où le missile est guidé jusqu'à une phase finale selon quelque principe connu de navigation proportionnelle, ou autre principe de guidage connu, dans lequel, au cours de ladite phase finale, le missile est guidé afin de suivre une trajectoire de référence prédéterminée lisse qui peut comprendre une pluralité de sous-trajectoires, la trajectoire de référence étant calculée conjointement avec l'initiation de ladite phase finale afin de présenter une continuité dans la transition entre le principe de guidage antérieur et le principe de guidage au cours de la phase finale.

**2.** Processus selon la revendication 1, dans lequel la phase finale est initiée lorsqu'un dispositif de ralliement agencé dans le missile se verrouille sur la cible.

**3.** Processus selon la revendication 1, dans lequel les critères de phase finale pour la condition du missile, tels que sa position et sa vitesse, sont établis, et la phase finale est initiée lorsque les critères de phase finale spécifiés sont réunis.

**4.** Processus selon la revendication 3, dans lequel le système GPS est employé pour déterminer la condition du missile.

**5.** Processus selon l'une quelconque des revendications précédentes 1 à 4, dans lequel la trajectoire de référence prédéterminée concernant la phase finale est déterminée de telle sorte que la trajectoire et au moins deux dérivées présentent une continuité dans les points où la phase finale de la trajectoire débute et se termine, et dans les points intermédiaires où s'effectuent les transitions entre les différentes sous-trajectoires.

**6.** Processus selon la revendication 5, dans lequel la continuité de la trajectoire est assurée pour deux ou trois dérivées.

**7.** Processus selon l'une quelconque des revendications précédentes 1 à 6, dans lequel, dans un cas bidimensionnel, les sous-trajectoires sont formées comme des segments de cercles, d'ellipses et/ou de fonctions polynomiales.

**8.** Processus selon l'une quelconque des revendications précédentes 1 à 6, dans lequel, dans un cas tridimensionnel, les sous-trajectoires sont formées sur la surface de sections curvilignes d'objets tels que des sphères, des cylindres, des ellipsoïdes, des tores, des cônes ou des paraboloïdes.

**9.** Processus selon l'une quelconque des revendications précédentes 1 à 8, où la phase finale est définie comme l'intervalle débutant lorsque le dispositif de ralliement du missile se verrouille sur la cible, ou lorsque les critères de phase finale spécifiés sont réunis, jusqu'à une phase d'alignement final, dans lequel les trajectoires de référence prédéterminées aux transitions vers la phase finale, entre lessous-trajectoires, et/ou vers la phase d'alignement, sont adaptées par lissage polynomial pour la formation d'une trajectoire lisse avec continuité dans ladite trajectoire et au moins deux dérivées.

**10.** Processus selon la revendication 9, dans lequel les transitions entre les sous-trajectoires sont lissées au moyen d'un polynôme d'ordre supérieur, tel qu'un polynôme du septième ordre, par exemple.

**11.** Processus selon l'une quelconque des revendications 9 à 10, dans lequel les transitions vers la phase finale et/ou la phase d'alignement sont lissées au moyen d'un polynôme d'ordre supérieur, tel qu'un polynôme du sixième ordre, par exemple.

**12.** Processus selon l'une quelconque des revendications précédentes, dans lequel la compensation de la dynamique du missile est entrée dans la trajectoire de référence prédéterminée.

Fig. 1

Fig 2

Fig. 3

Fig. 4

a) $C_1$

b) $C_2$

c) $C_3$ $C_4$

d) $C_5$ $C_6$

e) $C_7$ $C_8$

f) $C_9$ $C_{10}$

Fig. 5